# EUROPEAN PATENT APPLICATION

(11) **EP 2 756 940 A1**
(43) Date of publication of application: **23.07.2014**
(21) Application number: 12830928.3
(22) Date of filing: 29.05.2012
(51) Int. Cl.: B28B 11/04, C04B 41/88

(54) **COMPOSITE STRUCTURE, MOLDED FILM AND COMPOSITE STRUCTURE MANUFACTURING METHOD**

(30) Priority: 12.09.2011 JP 2011197996
(71) Applicant: NGK Insulators, Ltd., Nagoya-shi, Aichi 467-8530 (JP)
(72) Inventor: HIRAIWA Toshiki, Nagoya-shi Aichi 467-8530 (JP); OGAWA Toru, Nagoya-shi Aichi 467-8530 (JP); NUNOME Takuya, Nagoya-shi Aichi 467-8530 (JP)
(74) Representative: Naylor, Matthew John
(86) International application number: PCT/JP2012/063756
(87) International publication number: WO 2013/038755

(57) **Abstract**

In the case where a coating film is formed on a curved outer peripheral surface of a base body from a slurry through a wet process, when pseudoplasticity is imparted to the slurry, the slurry exhibits favorable film formability, and the coating film formed on the curved surface exhibits favorable shape stability. A solid film obtained through solidification of the coating film is formed such that the following relation is satisfied: t_{edge}/t_{center} ≤ 1.2 wherein t_{center} represents the thickness of the center of the film in a specific direction along the outer peripheral surface, and t_{edge} represents the thickness of the film at a position distant by 2t_{center} from one end of the film in the specific direction.

## Description

### Technical Field

The present invention relates to a composite structure comprising a base body having a curved outer peripheral surface, and a solid film formed on the outer peripheral surface. The present invention also relates to the solid film. The present invention also relates to a method for producing the composite structure.

### Background Art

For example, according to Japanese Patent Application Laid-Open (*kokai*) No. H02-144874, an electrode is formed on the side surface of a cylindrical, electrically conductive ceramic body having a honeycomb structure. The patent document describes that the electrode may be formed through application and baking of an electrically conductive paste.

### Summary of the Invention

In the case where a coating film is formed on a curved outer peripheral surface of a base body from a slurry through a wet process, there may arise a problem in that the coating film is not maintained in an intended form (particularly in a uniform thickness), due to occurrence of "sagging" of the slurry at ends of the coating film by the effect of the slurry's own weight before solidification (drying).

A conceivable means for solving such a problem is to add a relatively large amount of a thickener (e.g., a polymer binder) to the slurry, thereby increasing the viscosity of the slurry. However, such a means may raise another problem in that the resultant coating film has irregularities (protrusions and depressions) on its surface or contains air bubbles therein.

The present invention has been achieved for solving such a problem. Thus, an object of the present invention is to form a coating film more effectively on a curved outer peripheral surface of a base body from a slurry through a wet process, which film is formed for producing a composite structure.

The present inventors have conducted extensive studies, and as a result have found that in the case where a coating film is formed on a curved outer peripheral surface of a base body from a slurry through a wet process, when pseudoplasticity is imparted to the slurry, the slurry exhibits favorable film formability, and the coating film formed on the curved surface exhibits favorable shape stability. The present invention has been accomplished on the basis of this finding. As used herein, the term "pseudoplasticity" refers to a property in which viscosity increases at low shear rate, and viscosity drastically decreases at high shear rate (see, for example, Japanese Patent Application Laid-Open (*kokai*) No. H10-130076).

Accordingly, in one aspect of the present invention, there is provided a composite structure characterized by comprising:
a base body having a curved outer peripheral surface; and
a solid film which is provided on the outer peripheral surface of the base body by forming a coating film on the surface through application of a slurry exhibiting pseudoplasticity, and subsequently solidifying the coating film, wherein the solid film is formed such that the following relation is satisfied: t_{edge}/t_{center} ≤ 1.2 wherein t_{center} represents the thickness of the center of the film in a specific direction along the outer peripheral surface, and t_{edge} represents the thickness of the film at a position distant by 2t_{center} from one end of the film in the specific direction.

In another aspect of the present invention, there is provided a solid film characterized by being provided on a curved outer peripheral surface of a base body by forming a coating film on the surface through application of a slurry exhibiting pseudoplasticity, and subsequently solidifying the coating film, wherein the solid film is formed such that the following relation is satisfied: t_{edge}/t_{center} ≤ 1.2 wherein t_{center} represents the thickness of the center of the film in a specific direction along the outer peripheral surface, and t_{edge} represents the thickness of the film at a position distant by 2t_{center} from one end of the film in the specific direction.

In yet another aspect of the present invention, there is provided a method for producing the aforementioned composite structure, characterized by comprising:
a slurry preparation step of preparing a slurry exhibiting pseudoplasticity;
a coating film formation step of forming a coating film by applying the slurry to the aforementioned outer peripheral surface; and
a solidification step of solidifying the coating film, to thereby form a solid film.

The aforementioned base body may be in the shape of a column whose cross section has any of shapes, including circular, elliptic, and polygonal shapes. Specifically, for example, the base body may be in the shape of an elliptic column (including a cylinder). In this case, the solid film is formed so as to extend in a belt shape along the center axis of the base body, such that the solid film has an arc shape (a generally elliptic arc shape in the aforementioned specific example) as viewed in a cross section perpendicular to the center axis of the base body. The solid film is formed such that the following relation is satisfied: t_{edge}/t_{center} ≤ 1.2 wherein t_{center} represents the thickness of the center of the film in a longitudinal direction of the cross section of generally elliptic arc shape, and t_{edge} represents the thickness of the film at a position distant by 2t_{center} from one end of the film in the longitudinal direction.

The base body may have a "distorted" cross section; i.e., the base body may have neither a so-called "line-symmetric" cross section nor a "point-symmetric" cross section.

The base body may be formed of a ceramic molded product whose interior has a honeycomb structure and which has an electrical resistivity of 1 to 200 Ωcm. In this case, the solid film is formed as an electrode film having an electrical resistivity of 0.1 to 100 Ωcm. In this case, a pair of the electrode films may be provided at positions symmetrical with respect to the center axis of the base body.

The aforementioned solid film may be formed from a slurry prepared so that when d1 represents the viscosity of the slurry at a shear rate of 0.5 [sec⁻¹] or less, and d2 represents the viscosity of the slurry at a shear rate of 50 [sec⁻¹] or more, the ratio d1/d2 is 10 or more (specifically, a slurry prepared so as to have a d1 of 80,000 [cP] or more and a d2 of 9,500 [cP] or less). Such a slurry may be prepared so as to contain a main raw material for forming the solid film in an amount of 100 parts by weight, and a rheology-adjusting agent in an amount of 1.5 to 3 parts by weight, the agent containing a urethane resin or a urea resin as a main component.

In the present invention, since pseudoplasticity is imparted to the aforementioned slurry, during application of the slurry (i.e., during formation of the coating film), the slurry exhibits a low viscosity suitable for film formation by the effect of high shear rate. Thus, favorable film formability is secured. Meanwhile, during the time when the slurry, which is imparted with pseudoplasticity, is allowed to stand still after application thereof, since shear rate is reduced, the slurry forming the coating film on the aforementioned curved outer peripheral surface exhibits a high viscosity. Therefore, the coating film maintains favorable shape stability.

### Brief Description of the Drawings

[FIG. 1]

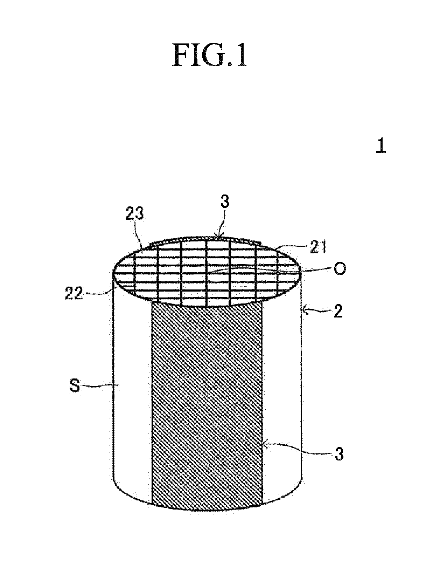

   FIG. 1 is a schematic perspective view of the configuration of a composite structure according to one embodiment of the present invention.
[FIG. 2]

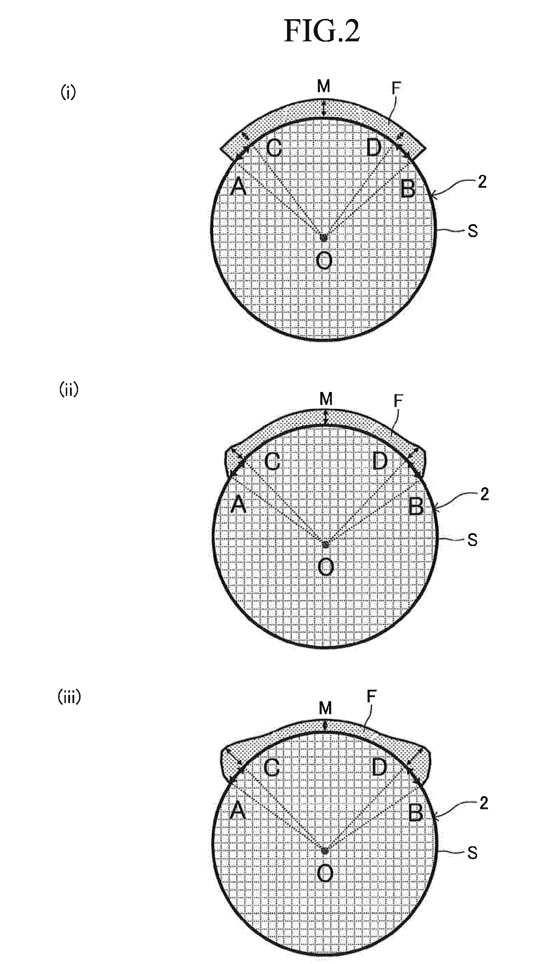

   FIG. 2 is a cross-sectional view of a coating film formed on the outer peripheral surface of the base body shown in FIG. 1.
[FIG. 3]

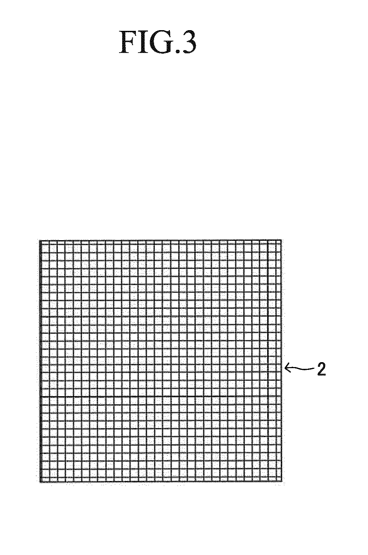

   FIG. 3 shows a cross section of one modification of the base body shown in FIG. 1.
[FIG. 4]

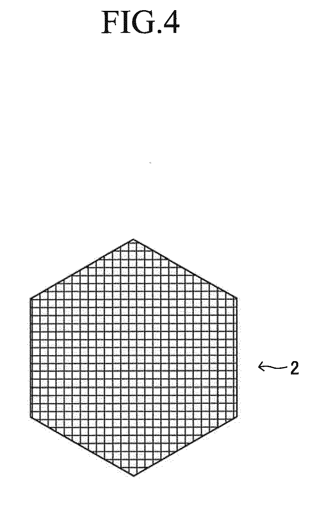

   FIG. 4 shows a cross section of another modification of the base body shown in FIG. 1.
[FIG. 5]

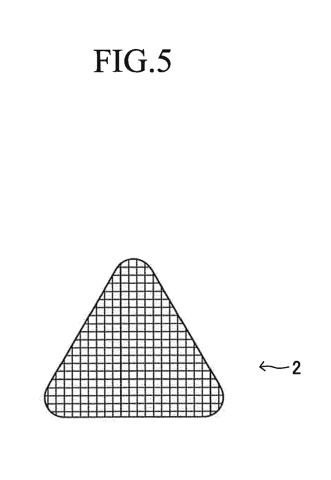

   FIG. 5 shows a cross section of yet another modification of the base body shown in FIG. 1.
[FIG. 6]

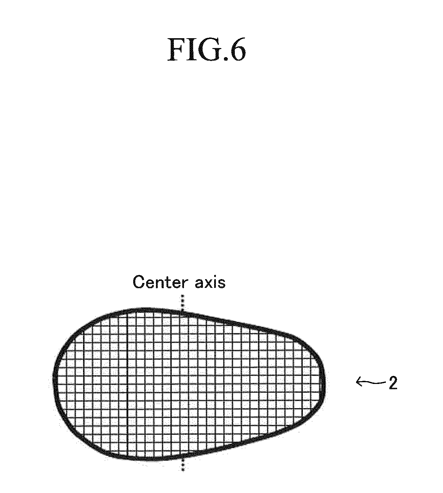

   FIG. 6 shows a cross section of yet another modification of the base body shown in FIG. 1.
[FIG. 7]

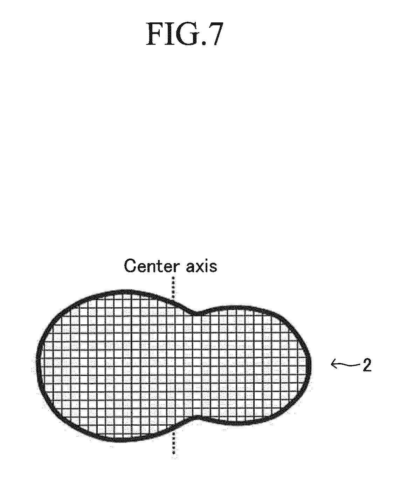

   FIG. 7 shows a cross section of yet another modification of the base body shown in FIG. 1.

### Mode for Carrying Out the Invention

Preferred embodiments of the present invention will next be described with reference to examples and comparative examples. The following description of the embodiments is nothing more than the specific description of mere example embodiments of the present invention to the possible extent in order to fulfill description requirements (descriptive requirement and enabling requirement) of specifications required by law.

Thus, as will be described later, naturally, the present invention is not limited to the specific configurations of embodiments and examples to be described below. Modifications that can be made to the embodiments and examples are collectively exemplified herein principally at the end, since insertion thereof into the description of the embodiments would disturb understanding of consistent description of the embodiments.

### <Summary of configuration of composite structure>

FIG. 1 is a schematic perspective view of the configuration of a composite structure 1 according to one embodiment of the present invention. The composite structure 1 includes a base body 2 and a pair of electrode films 3.

The base body 2 is formed of a ceramic honeycomb structure having an electrical resistivity of 1 to 200 Ωcm and including a thin, cylindrical outer peripheral wall 21 having an outer peripheral surface S, and numerous plate-like partition walls 22 provided inside the outer peripheral wall 21. The base body 2 includes therein numerous cells (fluid paths) 23 which are formed so as to be along the center axis O (in parallel with the center axis O). That is, the space inside the outer peripheral wall 21 is divided into the numerous cells 23 by the numerous partition walls 22.

Each of the paired electrode films 3 is an electrically conductive thin film having an electrical resistivity of 0.1 to 100 Ωcm, and is formed on the outer peripheral surface S of the base body 2 so as to extend in a belt shape along the center axis O (in parallel with the center axis O). That is, each electrode film 3 is provided such that the film has a generally arc shape as viewed in a cross section perpendicular to the center axis O. Specifically, the paired electrode films 3 are provided such that they are line-symmetrical with respect to the center axis O, so as to suppress, as much as possible, offset of the current which flows through the base body 2 when voltage is applied between the electrode films 3. Also, each electrode film 3 is formed such that the arc as viewed in the aforementioned cross section has a central angle of 30 to 130°.

In the present embodiment, each electrode film 3 is formed by applying a slurry exhibiting pseudoplasticity onto the outer peripheral surface S of the base body 2 to thereby form a coating film, and subsequently solidifying the coating film. The electrode film 3 is formed so as to satisfy the following relation: r = t_{edge}/t_{center} ≤ 1.2 (wherein t_{center} represents the thickness of the center of the electrode film 3 in a longitudinal direction (i.e., in a circumferential direction), the film having a generally arc shape as viewed in a cross section perpendicular to the center axis O; and t_{edge} represents the thickness of the electrode film 3 at a position distant by 2t_{center} from one end of the film 3 in the aforementioned direction).

Specifically, in the present embodiment, the base body 2 is formed to have a cylindrical shape having an outer diameter of 93 mm. Each electrode film 3 is formed to have a thickness t (average of t_{center} and t_{edge}) of 0.01 to 5 mm (typically 0.3 mm) and a width (length in aforementioned circumferential direction) of 80 mm, so that the base body 2 effectively generates heat when voltage is applied as described above.

### <Summary of production method>

Next will be described an outline of the production method for achieving the configuration shown in FIG. 1.

### (1) Slurry preparation step

A slurry is prepared by mixing a main raw material for forming each electrode film 3 with a rheology-adjusting agent containing a urethane resin or a urea resin as a main component (the agent may be referred to as a "pseudoplasticity-imparting agent"), a dispersion medium, a dispersant, and a binder. The thus-prepared slurry exhibits pseudoplasticity (in particular, rheologic property so as to attain a ratio d1/d2 of 10 or more (wherein d1 represents the viscosity of the slurry at a shear rate of 0.5 [sec⁻¹] or less, and d2 represents the viscosity of the slurry at a shear rate of 50 [sec⁻¹] or more)). Specifically, the slurry is prepared by adding the rheology-adjusting agent (1.5 to 3 parts by weight) to the main raw material (100 parts by weight) so that the d1 of the slurry is adjusted to 80,000 [cP] or more and the d2 of the slurry is adjusted to 9,500 [cP] or less.

In the present embodiment, the main raw material employed may be silicon carbide powder and metallic silicon. In this case, preferably, these are mixed so that the weight of metallic silicon is 20 to 40 parts by weight on the basis of 100 parts by weight of the total weight of them.

Many rheology-adjusting agents have been well known and commercially available. For example, in consideration of the type of the dispersion medium employed, etc., the rheology-adjusting agent employed may be appropriately selected from various types of rheology-adjusting agents, including modified polyacrylic, modified urea, and polyamide rheology-adjusting agents. Specific examples of the rheology-adjusting agent which may be employed include "SN Thickener 630," "SN Thickener 634," "SN Thickener 636," "SN Thickener 641," and "SN Thickener 4050" (products of San Nopco Limited); and "BYK-410," "BYK-420," "BYK-425," and "BYK-430" (products of BYK Japan KK).

No particular limitation is imposed on the dispersion medium, so long as it dissolves the rheology-adjusting agent, the dispersant, and the binder. Examples of the dispersion medium which may be employed include pure water; alcohols such as methanol, ethanol, isopropyl alcohol, and butanol; ethers such as 2-methoxyethanol, ethylene glycol monoethyl ether, ethylene glycol monobutyl ether, diethylene glycol dimethyl ether, diethylene ether, and diethylene glycol monobutyl ether; ketones such as acetone, methyl ethyl ketone, methyl isobutyl ketone, and diisobutyl ketone; esters such as ethyl acetate, butyl acetate, dimethyl glutarate, triacetin, ethylene glycol monomethyl ether acetate, ethylene glycol monobutyl ether acetate, diethylene glycol monoethyl ether acetate, diethylene glycol monobutyl ether acetate, and propylene glycol monomethyl ether acetate; hydrocarbons such as toluene, xylene, and cyclohexane; N-methyl-2-pyrrolidone; N,N-dimethylformamide; and sulfolane. The amount of the dispersion medium is preferably 15 to 60 parts by weight on the basis of 100 parts by weight of the total weight of silicon carbide powder and metallic silicon powder.

Examples of the dispersant which may be employed include polycarboxylic acid series copolymers, polycarboxylates, sorbitan fatty acid esters, polyglycerin fatty acid esters, phosphate series copolymers, sulfonate series copolymers, and polyurethane-polyester series copolymers having a tertiary amine. These dispersants may be employed singly or in combination of two or more species. The amount of the dispersant is preferably 0.1 to 2.0 parts by weight on the basis of 100 parts by weight of the total weight of silicon carbide powder and metallic silicon powder.

Examples of the binder which may be employed include methylcellulose, hydroxypropyl methylcellulose, hydroxypropoxyl cellulose, hydroxyethylcellulose, carboxymethylcellulose, polyvinyl alcohol, and glycerin. Of these, preferably, methylcellulose and hydroxypropoxyl cellulose are employed in combination. The amount of the binder is preferably 0.1 to 10.0 parts by weight on the basis of 100 parts by weight of the total weight of silicon carbide powder and metallic silicon powder.

### (2) Coating film formation step

The above-prepared slurry exhibiting pseudoplasticity is applied onto the outer peripheral surface S of the base body 2, to thereby form a coating film. In this case, the rheology-adjusting agent containing a urethane resin or a urea resin as a main component forms or eliminates a hydrogen bond between binder molecules, in response to the presence or absence of a shear force effect on the slurry. Thus, the aforementioned pseudoplasticity is exhibited.

When the above-defined d1 of the slurry is 80,000 [cP] or more, occurrence of "sagging" of the slurry in the coating film is suppressed before solidification (drying). Meanwhile, when the above-defined d2 of the slurry is 9,500 [cP] or less, favorable formability is achieved. Therefore, the coating film is readily formed through a well-known film formation technique such as screen printing. In addition, irregularities or air bubbles are prevented from being formed in the coating film or a solid film produced through solidification of the coating film.

FIG. 2 is a cross-sectional view of a coating film F formed on the outer peripheral surface S of the base body 2 shown in FIG. 1. FIG. 2(i) shows the state where the coating film exhibits favorable shape stability; FIG. 2(ii) shows the state where the coating film exhibits poor shape stability; and FIG. 2(iii) shows the state where the coating film exhibits very poor shape stability.

When the rheology-adjusting agent is added in an appropriate amount (specifically, 1.5 parts by weight or more), as shown in FIG. 2(i), there is properly maintained, until completion of solidification, the state where the non-solidified coating film F has a uniform thickness (specifically, the state where the ratio r (t_{edge}/t_{center}) is 1.2 or less (wherein t_{center} represents the thickness of the center M, and t_{edge} represents the thickness of a portion at position C or D, which is distant by 2t_{center} from end A or B toward the center M)).

In contrast, when the rheology-adjusting agent is added in an insufficient amount, as shown in FIG. 2(ii), "sagging" of the slurry occurs by the own weight of the coating film F before solidification, and the thickness of an end portion (A to C or B to D) increases, whereas the thickness of the center M decreases. When the rheology-adjusting agent is not added, as shown in FIG. 2(iii), "sagging" of the slurry occurs considerably.

### (3) Solidification (drying) step

Each electrode film 3 is formed through drying of the coating film provided on the outer peripheral surface S of the base body 2; i.e., evaporation of the dispersion medium from the coating film.

### <Examples>

A mixture of silicon carbide (SiC) powder and metallic silicon (Si) powder (60 : 40 by weight) (100 parts by weight) was mixed with pure water serving as a dispersion medium (40 parts by weight), a polycarboxylic acid copolymer serving as a dispersant (0.3 parts by weight), hydroxypropyl methylcellulose serving as a binder (0.5 parts by weight), and glycerin (8 parts by weight) by means of a mixer for 40 minutes, to thereby prepare a primary mixture. Subsequently, a specific amount (described below) of a rheology-adjusting agent ("BYK-420," product of BYK Japan KK) was added to and mixed with the primary mixture, followed by vacuum defoaming, to thereby prepare a ceramic slurry exhibiting pseudoplasticity. The ceramic slurry was applied, through screen printing, onto the outer peripheral surface of a cylindrical ceramic structure (radius: 46.5 mm), to thereby form a coating film having an arc length of 80 mm and a thickness of 0.3 mm. The thus-formed coating film was thoroughly dried through heating by means of a dryer at 80°C for one hour, to thereby form a solid film.

Table 1 shows evaluation results corresponding to different amounts of the rheology-adjusting agent added. In Table 1, "Irregularities" refers to the presence or absence of irregularities on the surface of a solid film formed through drying a coating film. The viscosity of a slurry was measured by means of a viscometer (Rheo Stress RS150, product of HAAKE).

**[Table 1]**

| | Amount of rheology-adjusting agent added [parts by weight] | | | | | |
|---|---|---|---|---|---|---|
| | 0 | 0.5 | 1 | 2 | 3 | 4 |
| d1 [cP] | 24,000 | 31,000 | 40,000 | 80,000 | 120,000 | 200,000 |
| d2 [cP] | 6,000 | 6,200 | 6,600 | 8,000 | 9,500 | 12,000 |
| d1/d2 | 4 | 5 | 6 | 10 | 13 | 17 |
| r | 2.13 | 1.90 | 1.45 | 1.20 | 1.13 | 1.05 |
| Irregularities | Absence | Absence | Absence | Absence | Absence | Presence |

As is clear from data shown in Table 1, when the rheology-adjusting agent is added in an appropriate amount (specifically 1.5 to 3 parts by weight), the resultant coating film exhibits favorable shape stability. In contrast, when the rheology-adjusting agent is not added, or added in an insufficient amount, "sagging" of the slurry occurs, and the resultant coating film has a non-uniform thickness. Meanwhile, when the rheology-adjusting agent is added in an excessive amount, "sagging" of the slurry is effectively suppressed, but irregularities are formed on the surface of a solid film formed through drying of the coating film.

### <Examples of modifications>

The above-described embodiment and specific examples are, as mentioned above, mere examples of the best mode of the present invention which the applicant of the present invention contemplated at the time of filing the present application. The above-described embodiment and specific examples should not be construed as limiting the invention. Various modifications to the above-described embodiment and specific examples are possible, so long as the invention is not modified in essence.

Several modifications will next be exemplified. In the following description of the modifications, component members similar in structure and function to those of the above-described embodiment are denoted by names and reference numerals same as those of the above-described embodiment. The description of the component members appearing in the above description of the embodiment can be applied as appropriate, so long as no inconsistencies are involved.

Needless to say, even modifications are not limited to those described below. Limitingly construing the present invention based on the above-described embodiment and the following modifications impairs the interests of an applicant (particularly, an applicant who is motivated to file as quickly as possible under the first-to-file system) while unfairly benefiting imitators, and is thus impermissible.

The structure of the above-described embodiment and the structures of the modifications to be described below are entirely or partially applicable in appropriate combination, so long as no technical inconsistencies are involved.

The present invention is not limited to the specific configurations described in the aforementioned embodiments. Thus, for example, the base body is not limited to a honeycomb structure. The solid film may be formed over the entire periphery of the base body.

The shape of the base body is not limited to an elliptic column. Thus, the base body may be formed of a columnar structure whose cross section has any of shapes, including circular, elliptic, and polygonal shapes. Specifically, as shown in FIGs. 3 and 4, the base body 2 may have a cross section assuming a polygonal shape (including a non-regular polygonal shape). Alternatively, as shown in FIG. 5, the base body 2 may have a polygonal cross section in which a portion or all of the corners are rounded. In the case where the base body 2 has a cross section having a "corner" as shown in FIGs. 3 to 5, even when the solid film is formed on a region including such a "corner," a variation in thickness between a portion of the film in the vicinity of the "corner" and another portion thereof can be suppressed as much as possible.

The base body 2 may have a "distorted" cross section as shown in FIGs. 6 and 7; i.e., the base body 2 may have neither a so-called "line-symmetric" cross section nor a "point-symmetric" cross section. Particularly, in the case where the base body has a concave region as shown in FIG. 7, a variation in thickness between a portion of the solid film provided in the concave region and another portion thereof can be suppressed as much as possible.

The present invention is not limited to the specific production methods described in the aforementioned embodiments. Thus, for example, the film formation step may be carried out through a well-known technique such as the doctor blade method. The solidification step is not necessarily carried out through drying. The main raw material, etc. are not limited to those shown above in the specific examples.

The solidification step may employ polymerization reaction. Specifically, the slurry prepared in the slurry preparation step may be a slurry containing a powdery raw material for film formation (which may contain two or more ceramic materials), a dispersion medium for dispersing the raw material, a dispersant for uniformly dispersing the raw material in the dispersion medium, binder precursors for producing an organic binder (synthetic resin) through a chemical reaction, a reaction promoter for promoting the chemical reaction, and a rheology-adjusting agent. In this case, the solidification step may be a drying-solidification step of solidifying the slurry by promoting the aforementioned chemical reaction in a primary molded product produced through a molding step, and removing, through evaporation, the dispersion medium from the primary molded product.

The drying-solidification step may be a slurry solidification (gelation) step in which a urethane resin (serving as an organic binder) is produced by allowing the aforementioned primary molded product to stand at ambient temperature, thereby promoting the chemical reaction of urethane precursors (an isocyanate and a polyol). In this case, the slurry forming the primary molded product exhibits high viscosity at the time of gelation initiation (i.e., at the time when the molded product is allowed to stand still). Therefore, precipitation of the powdery raw material can be effectively suppressed during gelation. Particularly when the raw material contains two or more ceramic materials, segregation caused by the difference in specific weight between the materials can be effectively suppressed.

No particular limitation is imposed on the isocyanate employed, so long as it is a substance having an isocyanate group as a functional group (the isocyanate is particularly preferably a polyisocyanate having a plurality of isocyanate groups as exemplified in the figure). Specifically, the employable "isocyanate" is preferably, for example, tolylene diisocyanate (TDI), diphenylmethane diisocyanate (MDI), or a modified product thereof. Also, the employable "isocyanate" is preferably an isocyanate having, in the molecule thereof, a reactive functional group other than an isocyanate group.

No particular limitation is imposed on the polyol employed, so long as it is a substance having, as a functional group, a plurality of alcoholic hydroxyl groups. The employable "polyol" is preferably, for example, ethylene glycol (EG), polyethylene glycol (PEG), propylene glycol (PG), polypropylene glycol (PPG), polytetramethylene ether glycol (PTMG), polyhexamethylene glycol (PHMG), and polyvinyl butyral (PVB).

The urethane precursors are not limited to the aforementioned specific examples. For example, the polyol employed may have another functional group (e.g., a carboxyl group or an amino group) capable of reacting with an isocyanate group. Alternatively, in place of or together with the polyol, there may be employed a substance having, for example, the aforementioned carboxyl group or amino group (the substance may have one alcoholic hydroxyl group). In order to suppress the progress of urethane reaction before molding, a blocking agent may be added to the slurry, or the urethane precursors (e.g., isocyanate) may be provided with a blocking effect.

Needless to say, those modifications which are not particularly referred to are also encompassed in the technical scope of the present invention, so long as the invention is not modified in essence.

Those components which partially constitute means for solving the problems to be solved by the present invention and are illustrated with respect to operations and functions encompass not only the specific structures disclosed above in the description of the above embodiment and modifications but also any other structures that can implement the operations and functions. Further, the contents (including specifications and drawings) of the prior application and publications cited herein can be incorporated herein as appropriate by reference.

## Claims

1. A composite structure **characterized by** comprising:
a base body having a curved outer peripheral surface; and
a solid film which is provided on the outer peripheral surface of the base body by forming a coating film on the surface through application of a slurry exhibiting pseudoplasticity, and subsequently solidifying the coating film, wherein the solid film is formed such that the following relation is satisfied: t_{edge}/t_{center} ≤ 1.2 wherein t_{center} represents the thickness of the center of the film in a specific direction along the outer peripheral surface, and t_{edge} represents the thickness of the film at a position distant by 2t_{center} from one end of the film in the specific direction.

2. A composite structure according to claim 1, wherein the base body is in the shape of a column whose cross section has any of shapes, including circular, elliptic, and polygonal shapes; the solid film is formed so as to extend in a belt shape along the center axis of the base body, such that the solid film has a generally arc shape as viewed in a cross section perpendicular to the center axis; and the specific direction is a longitudinal direction of the generally arc shape.

3. A composite structure according to claim 2, wherein the base body is formed of a ceramic molded product whose interior has a honeycomb structure and which has an electrical resistivity of 1 to 200 Ωcm; and the solid film is an electrode film having an electrical resistivity of 0.1 to 100 Ωcm.

4. A composite structure according to claim 3, wherein a pair of electrode films are provided at positions symmetrical with respect to the center axis of the base body.

5. A composite structure according to any one of claims 1 to 4, wherein the solid film is formed from the slurry prepared so that when d1 represents the viscosity of the slurry at a shear rate of 0.5 [sec⁻¹] or less, and d2 represents the viscosity of the slurry at a shear rate of 50 [sec⁻¹] or more, the ratio d1/d2 is 10 or more.

6. A composite structure according to claim 5, wherein the slurry is prepared so as to have a d1 of 80,000 [cP] or more and a d2 of 9,500 [cP] or less.

7. A composite structure according to claim 5 or 6, wherein the slurry contains a main raw material for forming the solid film in an amount of 100 parts by weight, and a rheology-adjusting agent in an amount of 1.5 to 3 parts by weight, the agent containing a urethane resin or a urea resin as a main component.

8. A solid film **characterized by** being provided on an outer peripheral surface of a base body by forming a coating film on the surface through application of a slurry exhibiting pseudoplasticity, and subsequently solidifying the coating film, wherein the solid film is formed such that the following relation is satisfied: t_{edge}/t_{center} ≤ 1.2 wherein t_{center} represents the thickness of the center of the film in a specific direction along the outer peripheral surface, and t_{edge} represents the thickness of the film at a position distant by 2t_{center} from one end of the film in the specific direction.

9. A solid film according to claim 8, which is formed so as to have a generally arc shape as viewed in a cross section perpendicular to the center axis of the base body which is in the shape of a column whose cross section has any of shapes, including circular, elliptic, and polygonal shapes, wherein the specific direction is a longitudinal direction of the generally arc shape.

10. A solid film according to claim 9, which is provided on the outer peripheral surface of the base body formed of a ceramic molded product having therein a honeycomb structure and having an electrical resistivity of 1 to 200 Ωcm, and which is an electrode film having an electrical resistivity of 0.1 to 100 Ωcm.

11. A solid film according to any one of claims 8 to 10, which is formed from a slurry prepared so that when d1 represents the viscosity of the slurry at a shear rate of 0.5 [sec⁻¹] or less, and d2 represents the viscosity of the slurry at a shear rate of 50 [sec⁻¹] or more, the ratio d1/d2 is 10 or more.

12. A solid film according to claim 11, wherein the slurry is prepared so as to have a d1 of 80,000 [cP] or more and a d2 of 9,500 [cP] or less.

13. A solid film according to claim 11 or 12, wherein the slurry contains a main raw material for forming the solid film in an amount of 100 parts by weight, and a rheology-adjusting agent in an amount of 1.5 to 3 parts by weight, the agent containing a urethane resin or a urea resin as a main component.

14. A method for producing a composite structure comprising:
a base body having a curved outer peripheral surface; and
a solid film which is formed on the outer peripheral surface of the base body such that the following relation is satisfied: t_{edge}/t_{center} ≤ 1.2 wherein t_{center} represents the thickness of the center of the film in a specific direction along the outer peripheral surface, and t_{edge} represents the thickness of the film at a position distant by 2t_{center} from one end of the film in the specific direction, which method is **characterized by** comprising:
a slurry preparation step of preparing a slurry exhibiting pseudoplasticity;
a coating film formation step of forming a coating film by applying the slurry to the outer peripheral surface; and
a solidification step of solidifying the coating film, to thereby form the solid film.

15. A method for producing a composite structure according to claim 14, wherein the base body is in the shape of a column whose cross section has any of shapes, including circular, elliptic, and polygonal shapes; the solid film is formed so as to have a generally arc shape as viewed in a cross section perpendicular to the center axis of the base body; and the specific direction is a longitudinal direction of the generally arc shape.

16. A method for producing a composite structure according to claim 15, wherein the base body is formed of a ceramic molded product whose interior has a honeycomb structure and which has an electrical resistivity of 1 to 200 Ωcm; and the solid film is an electrode film having an electrical resistivity of 0.1 to 100 Ωcm.

17. A method for producing a composite structure according to claim 16, wherein a pair of electrode films are formed at positions symmetrical with respect to the center axis of the base body.

18. A method for producing a composite structure according to any one of claims 14 to 17, wherein the slurry is prepared so that when d1 represents the viscosity of the slurry at a shear rate of 0.5 [sec⁻¹] or less, and d2 represents the viscosity of the slurry at a shear rate of 50 [sec⁻¹] or more, the ratio d1/d2 is 10 or more.

19. A method for producing a composite structure according to claim 18, wherein the slurry is prepared so as to have a d1 of 80,000 [cP] or more and a d2 of 9,500 [cP] or less.

20. A method for producing a composite structure according to claim 18 or 19, wherein the slurry contains a main raw material for forming the solid film in an amount of 100 parts by weight, and a rheology-adjusting agent in an amount of 1.5 to 3 parts by weight, the agent containing a urethane resin or a urea resin as a main component.
